# EUROPÄISCHE PATENTSCHRIFT

(11) **EP 0 906 480 B1**
(45) Veröffentlichungstag und Bekanntmachung des Hinweises auf die Patenterteilung: **10.05.2000**
(21) Anmeldenummer: 97928237.3
(22) Anmeldetag: 18.06.1997
(51) Int. Cl.: E04C 3/29, B32B 15/08, B32B 31/30, B29C 47/02

(54) **BAUELEMENT**
STRUCTURAL MEMBER
ELEMENT STRUCTURAL

(30) Priorität: 22.06.1996 DE 19625080; 10.06.1997 DE 19724361
(43) Veröffentlichungstag der Anmeldung: 07.04.1999
(73) Patentinhaber: Dingler, Gerhard, D-72221 Haiterbach (DE)
(72) Erfinder: Dingler, Gerhard, D-72221 Haiterbach (DE)
(74) Vertreter: Maser, Jochen, Dipl.-Ing.
(86) Internationale Anmeldenummer: EP9703186
(87) Internationale Veröffentlichungsnummer: WO9749877

(56) Entgegenhaltungen:
- DE-A- 1 434 058
- DE-A- 1 965 272
- DE-A- 3 438 448
- DE-A- 4 137 649
- GB-A- 2 186 655
- GB-A- 2 202 180
- US-A- 2 855 021

## Beschreibung

Die Erfindung betrifft ein Bauelement gemäß dem Oberbegriff des Anspruchs 1 und ein Verfahren zur Herstellung eines Bauelementes gemäß dem Oberbegriff des Anspruchs 29.

Solche Bauelemente werden häufig, aber nicht ausschließlich in der Bauindustrie verwendet. Aus der DE 41 37 649 A1 ist ein Bauelement bekannt geworden, welches im wesentlichen Kunststoff mit einem ersten niederen Elastizitätsmodul und mit einer innerhalb des Bauelementes befindlichen Schicht aus einem Material, das einen zweiten, wesentlich höheren Elastizitätsmodul aufweist. Diese Schicht, die bevorzugt aus einer Aluminiumlegierung besteht, weist eine Systemebene auf, entlang der sich die profilierte Schicht erstreckt. Bei beispielsweise einem plattenförmigen Element liegt die Systemebene in einer Querachse des plattenförmigen Bauelementes und die Schicht ist trapezförmig ausgebildet, wobei die Schicht punktsymmetrisch zur Systemebene verläuft. Die im wesentlichen parallel zur Außenwand verlaufenden Abschnitte der trapezförmigen Schicht sind durch diagonal verlaufende Abschnitte miteinander verbunden, so daß wechselseitig zur Systemebene ein im wesentlichen parallel zur Außenschicht verlaufender Abschnitt der Schicht vorgesehen ist. Durch das Einlagern einer derartigen Schicht in ein aus Kunststoff mit einem niederen Elastizitätsmodul bestehendes Bauelement kann der Bauteilelastizitäts-Modul um beispielsweise 5 bis 15% erhöht werden. Dabei dienen die diagonal verlaufenden Abschnitte der Schicht, die die Systemebene durchqueren, als Schubbrücken, wodurch die auf das Bauelement wirkenden Schubkräfte besser aufgenommen werden können und der Bauteilelastizitäts-Modul erhöht werden kann.

Aus der DE 41 37 649 A1 ist des weiteren ein I-Träger bekanntgeworden, der analog dem plattenförmigen Bauelement ausgebildet ist. In dem I-Träger ist eine Schicht eingebracht, die einen Kopf- und einen Fußbereich aufweist, die durch einen zickzackförmigen Mittelbereich miteinander verbunden sind. Dieser Mittelbereich bildet eine Schubbrücke zwischen dem Kopf- und Fußbereich der Schicht, die in dem Bauelement eingelagert ist. Somit können die auf das Bauelement wirkenden Kräfte besser aufgenommen werden, da durch diese Schicht eine Erhöhung des gesamten Elastizitätsmoduls gegenüber einem Bauelement ohne eine derartige Schicht erreicht wurde.

Derartige Bauelemente sind zwar gegenüber den bisherig bekannten Bauelementen aus Holz oder einer Holzschichtverleimung in bezug auf die Entsorgung, Recycelbarkeit überlegen. Jedoch erfordert die Ausbildung und Ausgestaltung der Schichten mehrere Arbeitsgänge zu dessen Profilierung, so daß die Herstellung auch aufgrund der Einbindung der profilierten Schicht in das Bauelement kostenintensiv ist. Der Bauteil-Elastizitätsmodul von Bauelementen aus Kunststoff mit eingelagerten Schichten konnte gegenüber den aus Holz ausgebildeten bzw. durch eine Phenol-Harz-Verleimung verbessert werden, jedoch ist der Anwendungsbereich aufgrund des relativ niederen Bauteil-Elastizitätsmoduls begrenzt.

Der Erfindung liegt deshalb die Aufgabe zugrunde, ein Bauelement zu schaffen, das einfach herstellbar ist und eine Erhöhung der Belastbarkeit aufgrund eines durch die Konstruktion bedingten höheren Bauteil-Elastizitätsmoduls ermöglicht. Des weiteren liegt der Erfindung die Aufgabe zugrunde, ein Verfahren zur Herstellung des Bauelements zu schaffen, das eine kostengünstige Produktion des erfindungsgemäßen Bauelements mit einem hohen Ausstoß an Bauelelementen ermöglicht.

Die Aufgabe wird erfindungsgemäß durch die Merkmale des Anspruchs 1 und des Anspruchs 29 gelöst.

Das erfindungsgemäß ausgestaltete Bauelement weist den Vorteil auf, daß durch eine einfache Anordnung und Ausgestaltung der mit einem zweiten höheren Elastizitätsmodul ausgebildeten und in den Kunststoffkörper eingelagerten Schichten eine zumindest 1 1/2-fache Erhöhung des Bauteil-Elastizitätsmoduls gegenüber den aus dem Stand der Technik bekannten Bauelementen erzielt werden kann. Dafür ist vorgesehen, daß zwei getrennt voneinander angeordnete und die Systemebene durchquerende Schichten mit einem zweiten höheren Elastizitätsmodul in das Bauelement zwischen einer Innenschicht und Außenschicht eingebracht sind. Diese Schichten weisen einen Kreuzungspunkt mit der Systemebene auf, die vorteilhafterweise möglichst weit zueinander beabstandet und nahe dem Wandbereich des Bauelementes angeordnet sind. Dadurch kann ein sogenannter Sandwich-Aufbau gegeben sein, wodurch eine aus Kunststoff bestehende Kernschicht durch eine obere und untere Schicht mit einem zweiten höheren Elastizitätsmodul begrenzt ist, die wiederum mit zumindest einer aus Kunststoff bestehenden Außenschicht überdeckt sein kann.

Die Schichten mit dem zweiten höheren Elastizitätsmodul sind nicht unmittelbar miteinander verbunden, d.h. daß die die Systemebene durchquerenden Abschnitte, die eine Schubbrücke bilden, weggelassen wurden. Es wäre zu erwarten gewesen, daß bei einer derartigen Konfiguration durch Berechnungen nach dem Steiner'schen Satz eine geringere Belastbarkeit bzw. eine geringere Bauteilsteifigkeit zu erzielen wäre, da eine Verbundwirkung zwischen einer oberen und einer unteren Schicht durch den fehlenden Mittelbereich bzw. der Schubbrücke nicht gegeben sei. Es wurde angenommen, daß ein Aufbau unter Weglassung einer Schubbrücke nicht als Gesamtbauelement wirkt, sondern vielmehr wie zwei zueinander parallel geschaltete Bauelemente, die sich gegenseitig nur geringfügig beeinflussen. Außerdem wurde angenommen, daß das Kriechen durch die fehlende Schubbrücke nicht verhindert wird.

Entgegen dieser Auffassung hat es sich jedoch gezeigt, daß gerade durch diese Konfiguration, wonach eine obere und untere Schicht getrennt voneinander in einem Randbereich der Außenschichten eines Bauelementes angeordnet werden, eine Erhöhung der Bauteilsteifigkeit um zumindest den Faktor 1,5 ermöglicht sein kann.

Diese Erhöhung der Bauteilsteifigkeit beruht nach den Kenntnissen zum Anmeldezeitpunkt zum einen darauf, daß im wesentlichen durchgehende Schichten im Randbereich des Bauelementes verwendet werden, die eine bessere Kraftaufnahme ermöglichen. Im Gegensatz hierzu ist aus dem plattenförmigen Bauelement gemäß dem Stand der Technik bekannt, daß aufgrund der trapezförmigen Ausbildung der Schicht nur Teilabschnitte, die im Randbereich nicht miteinander in Verbindung stehen, vorgesehen sind, wodurch bei Biegebeanspruchungen eine geringere Lastaufnahme gegeben ist. Zum anderen kann durch die Sandwich-Konstruktion dennoch eine Verbundwirkung erreicht werden, so daß sich durch das Zusammenwirken der Innenschicht mit den die Innenschicht begrenzenden Schichten mit höherem Elastizitätsmodul und die an diesen Schichten aufgebrachten Außenschichten eine Erhöhung des Bauteil-Elastizitätsmo- duls erzielen läßt. Außerdem hat sich gezeigt, daß das Kriechverhalten direkt von den hohen Zugspannungen in der äußersten Zone und von der Schubbrückenausbildung abhängig ist.

Eine vorteilhafte Ausführungsform der Erfindung sieht vor, daß die Schichten einen Haftvermittler aufweisen. Dadurch kann eine vollflächige Verbindung zwischen der Innenschicht und der Außenschicht zu den Schichten mit höherem Elastizitätsmodul ermöglicht sein.

Des weiteren weist der vorzugsweise auf beiden Seiten aufgebrachte Haftvermittler den Vorteil auf, daß bei der Herstellung während des Abkühlprozesses sich die Verbindung der Kunststoffschichten und den Schichten, vorzugsweise aus einer Aluminiumlegierung, nicht lösen. Die Wärmeausdehnung von einer Aluminiumlegierung ist geringer als die von Kunststoff. Durch den Haftvermittler kann der abkühlende Kunststoff dennoch eine gute Verbindung zur Schicht beibehalten. Vorzugsweise wird eine geschäumte Innenschicht verwendet, deren Schäumungsgrad zur Mittelachse zunimmt, so daß elastische Verschiebungen möglich sind, die zusätzlich dazu beitragen, daß die Verbindung nicht gelöst wird.

Das erfindungsgemäße Verfahren zur Herstellung derartiger Bauelemente weist den Vorteil auf, daß auf einfache Weise eine kontinuierliche Herstellung von Bauelementen ermöglicht ist. Bei diesem Verfahren können über eine Koextrusionsdüse die für das gesamte Bauelement benötigten Materialien zur Ausbildung der einzelnen Schichten des Sandwich-Aufbaus gleichzeitig oder nahezu gleichzeitig zugeführt und verarbeitet werden. Anschließend werden die Schichten als Verbund einer Kalibrierung zugeführt.

Die durch eine Innenschicht getrennten und zueinander beabstandeten Schichten können von einem Blechwickel (coil) abgezogen und einer Oberseite und Unterseite der Innenschicht zugeführt werden. Des weiteren kann gleichzeitig über die Koextrusionsdüse eine Außenschicht auf die Schichten aufgetragen werden. Der Koextrusionsdüse kann in kurzem Abstand eine Kalibrierung nachgeschalten sein. Dadurch ist möglich, daß die Innenschicht, die einen hohen Schäumungsanteil von mindestens 30% aufweisen kann, unmittelbar der Kalibrierung zugeführt wird. Der Ausschäumvorgang erfolgt somit ausschließlich in der Kalibrierung. Die beiden Schichten können von einer Längsmittelachse aus gesehen durch die ausschäumende Innenschicht in einen oberen und unteren Randbereich gedrückt werden, so daß die Kreuzungspunkte der Schichten mit der Systemebene weit zueinander beabstandet werden können.

Weitere vorteilhafte Ausgestaltungen und Weiterbildungen sind in den weiteren Ansprüchen der nachfolgenden Beschreibung und der Zeichnung angegeben.

Die Erfindung wird nunmehr anhand von bevorzugten Ausführungsbeispielen beschrieben. In der Zeichnung zeigen:
- Fig. 1: einen schematischen Querschnitt durch ein plattenförmiges Bauelement,
- Fig. 2: einen schematischen Querschnitt durch einen 1-Träger,
- Fig. 3: einen schematischen Querschnitt durch ein Winkelprofil,
- Fig. 4: einen schematischen Querschnitt durch ein T-Profil und
- Fig. 5: einen Kurvenverlauf über den Querschnitt, der qualitativ angibt, wie das Verhältnis von Kunststoffmaterial zu Hohlräumen ist und
- Fig. 6: eine schematische Darstellung einer Anlage zur Durchführung des Ver fahrens und Herstellung eines erfindungsgemäßen Bauelementes.

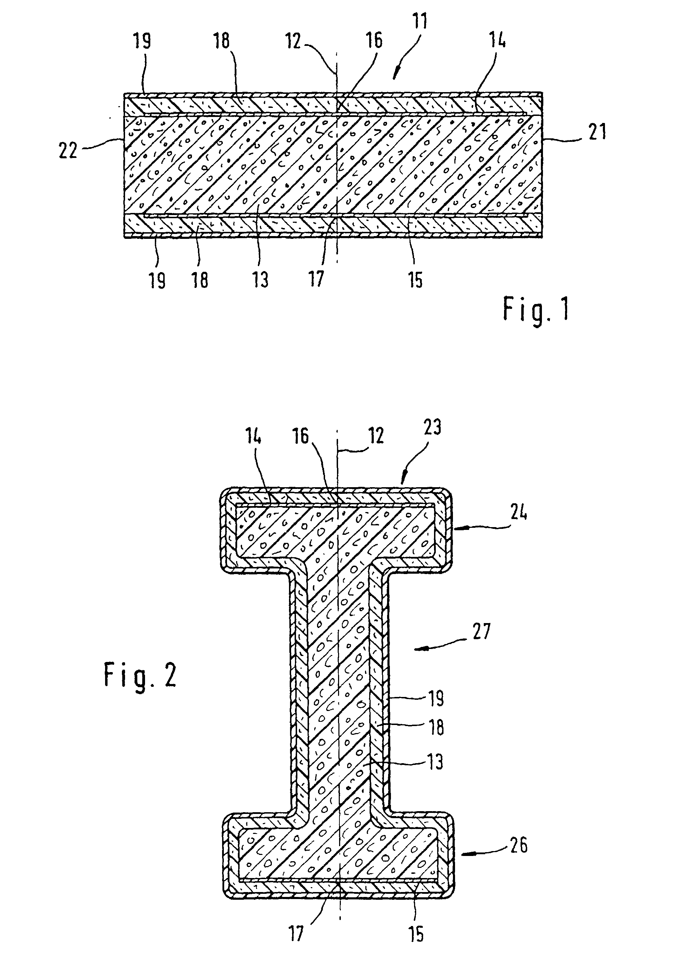

In Fig. 1 ist ein Querschnitt durch ein plattenförmiges Bauelement 11 dargestellt. Diese Bauelemente 11 können für den Einsatz in der Bauindustrie eine Dicke im wesentlichen von 12 bis 23 mm aufweisen. Die Länge und Breite können in Abhängigkeit der Anwendungsfälle vorgesehen sein, wobei bevorzugt eine Breite zwischen 1 bis 2 m und eine Länge von 2,5 bis 6 m vorgesehen ist.

Das Bauelement 11 weist eine Systemebene 12 auf, die einer Hochachse des plattenförmigen Bauelementes 11 entspricht. Eine Innenschicht 13 bzw. eine Kernschicht des plattenförmigen Bauelementes 11 besteht aus einem Kunststoff, der in Abhängigkeit der Anwendung einen entsprechenden Elastizitätsmodul aufweisen kann. Vorteilhafterweise wird ein geschäumter Kunststoff vorgesehen, dessen Schäumgrad zwischen 20 bis 50 % liegt. Die Innenschicht 13 wird bevorzugt aus einem relativ billigen Material hergestellt, wie beispielsweise Polypropylen, das recycelt wurde. Die Innenschicht 13 kann zusätzlich mit Materialien, die die Festigkeit erhöhen, aufgefüllt werden. Dies können beispielsweise Zusätze wie Talkum und/oder Glasfasern sein. Talkum hat gegenüber den Glasfasern den Vorteil, daß es isotrop reagiert, wohingegen die Glasfasern bei der Erwärmung einer Vorzugsrichtung unterliegen, die sich ggfs. nachteilig auswirken kann.

Die Innenschicht 13 des Bauelementes 11 ist durch eine obere Schicht 14 und eine untere Schicht 15 begrenzt. Die Schichten 14, 15 erstrecken sich im wesentlichen vollständig über die gesamte Breite des Bauelementes 11 und durchqueren die Systemebene 12 in einem Kreuzungspunkt 16 und 17. Die Schichten 14, 15 sind aus Leichtmetall, insbesondere Aluminium oder einer Aluminiumlegierung wie beispielsweise AlMgSi 0,5 ausgebildet. Alternativ können weitere leichtmetallische Materialien, aber auch Metalle eingesetzt werden. Des weiteren können zur Versteifung Gewebe, Matten oder Gewirke vorgesehen sein, die richtungsabhängig entsprechend der Hauptbelastungsrichtung eingearbeitet werden. Die Schichten 14, 15 sind eben und vollflächig ausgebildet und erstrecken sich im wesentlichen vollständig über die gesamte Breite des plattenförmigen Bauelementes 11. Alternativ kann vorgesehen sein, daß eine gelochte und/oder gewellte und/oder trapezförmige oder dergleichen ausgebildete Schicht oder ggf. eine als Hohlprofil ausgebildete Schicht eingelegt wird.

Die Schichten 14, 15 sind als Folien bzw. Bleche ausgebildet und weisen in Abhängigkeit des Abstandes zueinander und der aufzunehmenden Kräfte als auch in Abhängigkeit des für die Innenschicht 13 verwendeten Materials eine Dicke von 0,25 bis 3 mm auf. Um mit den Kunststoffmaterialien eine Verbundwirkung zu erzielen, ist es erforderlich, daß die Schicht 14, 15 relativ dünn ausgebildet ist. Dies weist den Vorteil auf, daß sich die Bauelemente 11 leicht nageln und/oder sägen lassen, insbesondere wenn eine Schicht aus Leichtmetall eingesetzt wird.

Auf den Schichten 14, 15 ist eine Außenschicht 18 vorgesehen, die ebenfalls aus Kunststoff besteht. Für diese Außenschicht 18 kann derselbe Kunststoff wie für die Innenschicht 13 verwendet werden. Bevorzugt wird für die Außenschicht 18 ein ungeschäumter Kunststoff verwendet, der beispielsweise ein Polyamid und/oder Polypropylen ist. Die Außen- schicht ist mit Glasfasern gefüllt, wobei ein Glasanteil zwischen 20 und 40 % vorgesehen ist. Dadurch kann eine Außenschicht 18 geschaffen sein, die gegenüber der Innenschicht einen höheren Elastizitätsmodul aufweist. Um baustellengerecht zu sein, ist die Außenschicht 18 als hochfeste Schicht ausgebildet. In dieser Außenschicht 18 können Additive eingearbeitet sein, um die Außenschicht 18 witterungsbeständig und/oder UV-beständig und/oder schlagzäh auszubilden. Die verschleißfeste Außenschicht 18 beträgt eine Dicke von ungefähr 1 bis 2 mm. Grundsätzlich ist vorgesehen, daß die Dicke der Außenschicht 18 in etwa 10 % der Gesamtdicke des Bauelementes 11 umfaßt.

Gemäß dem in Fig. 1 dargestellten Ausführungsbeispiel ist auf die Außenschicht 18 eine Gleitschicht 19 aufgebracht. Diese hat im wesentlichen die Aufgabe, daß bei einer kontinuierlichen Herstellung der plattenförmigen Bauelemente 11 geringere Abzugskräfte benötigt werden, um das Bauelement 11 leicht aus einer Kalibirierung herauszufördern. Für die Gleitschicht 19 ist ein Thermoplast, beispielsweise Polypropylen mit Additiven vorgesehen, der gute Gleiteigenschaften aufweist. Des weiteren können betonabweisende oder UV-feste oder witterungsfeste Additive enthalten sein. Die Gleitschicht 19 ist mit einer Schichtdicke von 0,1 bis 0,2 mm hinreichend dick.

Die Seitenflächen 21, 22 des Bauelementes 11 können im Gegensatz zum Holz offen ausgebildet sein. Die Schichten 14, 15 können sich bis zu den Seitenflächen 21, 22 erstrecken oder mit geringem Abstand zu den Seitenflächen angeordnet sein. Die verwendeten Kunststoffe nehmen im wesentlichen kein Wasser auf und es kann auch kein Wasser zwischen die einzelnen Schichten 13, 14, 15, 18, 19 eindringen. Dadurch kann ein weiterer Arbeitsgang zum Verschließen der Seitenflächen und somit Kosten eingespart werden.

Durch eine Sandwich-Bauweise für ein plattenförmiges Bauelement 11 gemäß Fig. 1 kann eine Erhöhung des Elastizitätsmoduls um zumindest den Faktor 1,5 gegenüber aus dem Stand der Technik bekannten plattenförmigen Bauelementen mit einer trapezförmig ausgebildeten Schicht ermöglicht sein. Das aus der DE 41 37 649 A1 bekannte plattenförmige Bauelement mit einer trapezförmigen Aluminiumschicht weist beispielsweise ein Bauteilelastizitäts-Modul von in etwa 2.200 N/mm² auf. Bei Verwendung derselben Materialien kann durch die erfindungsgemäße Ausgestaltung des plattenförmigen Bauelementes 11 mit einem Aluminiumblech, das einen in etwa 40- %igen Lochanteil aufweist, ein Bauteilelastizitäts-Modul von ungefähr 3.500 N/mm² erzielt werden und bei einem vollflächig ausgebildeten Aluminiumblech ein Bauteilelastizitäts-Modul über 5.000 N/mm² erzielt werden. Diese Steigerung des Elastizitätsmoduls beruht im wesentlichen darauf, daß die Schichten 14, 15 beidseitig eine Haftvermittlungsschicht aufweisen, damit mit der Innenschicht 13 und der Außenschicht 18 eine im Idealfall stoffschlüssige Verbindung geschaffen werden kann. Dadurch kann eine Erhöhung der Steifigkeit des plattenförmigen Elementes 11 bei einer einwirkenden Biegekraft oder Schubspannung gegeben sein. Die Schichten 14, 15 wirken dann nicht - wie zunächst angenommen wurde - als lose Lagen, die übereinanderliegend angeordnet sind und somit eine gegenseitige Beeinflussung ausschließen würden. Es hat sich erstaunlicherweise gezeigt, daß der aufgeschäumte Kunststoff der Innenschicht 13 als auch die Außenschicht 18 in Verbindung mit einem Haftvermittler zu den Schichten 14, 15 eine hohe Haftung aufweisen und gegenüber dem Stand der Technik höhere Biegesteifigkeiten, die sich aus dem Elastizitätsmoduls multipliziert mit dem Flächenträgheitsmoment ergeben, erreichbar sind.

Bei der Ausgestaltung eines plattenförmigen Bauelementes 11 ist die Verhältnismäßigkeit der Stärke der einzelnen Schichten 13, 14, 15, 18, 19 als auch die Materialauswahl für die jeweiligen Schichten 13, 14, 15, 18, 19 zu beachten. Bei einer Überbeanspruchung des Bauelementes 11 können zwei Effekte auftreten: Zum einen kann zuerst die Außenschicht reißen, wodurch es dann zum Bruch der Schicht 14,15 bis zum völligen Bruch des Plattenelementes kommen kann. Zum andern kann zuerst die Kernschicht versagen, da die Schubspannung zu groß wurde und die Schubfestigkeit nicht hinreichend groß war, wodurch es ebenfalls zum Bruch von Plattenelementen kommen kann.

Im ersten Fall bedeutet dies, daß die Außenschicht 18 die Randfaserdehnung nicht mehr aufnehmen kann, was darauf hindeutet, daß die Außenschicht 18 elastischer oder dicker auszubilden wäre. Des weiteren kann zur Vermeidung diese Falles die Maßnahme ergriffen werden, daß die Schicht 14, 15 dicker und somit das Bauteil derart steif wird, daß die Randfaserdehnung verringert wird.

Im zweiten Fall kann die Dicke der Innenschicht 13 erhöht werden oder ein anderes Kunststoffmaterial mit höheren Festigkeitseigenschaften ausgewählt werden. Ferner kann vorgesehen sein, daß zur Erhöhung der Steifigkeit der Innenschicht 13 der Schaumanteil verringert und der Talkum und/oder Glasfaseranteil erhöht wird.

Aus den oben genannten Fällen wird die Abstimmung der Materialien aufeinander deutlich. Beispielsweise kann das Verhältnis zwischen dem ersten höheren und dem zweiten niederen E-Modul 3-5:1 sein, wobei der niedere E-Modul im Bereich zwischen 600 - 1200 N/m² liegen kann. Weitere größere und kleinere Verhältnisse können auch in Abhängigkeit des Haftvermittlers sein.

Ein bevorzugtes Ausführungsbeispiel für ein Bauelement mit einer Plattendicke von 20 mm weist eine 17 mm starke Innenschicht aus geschäumtem Polypropylen mit einem 20 bis 40%-igen Anteil Talkum auf. Die Schicht 14, 15 besteht aus einer 0,3 mm starken Folie aus einer Aluminiumlegierung AlMgSi 0,5 mit beidseitig aufgetragenem Haftvermittler. Die Außenschicht 18 ist ein ungeschäumtes PP mit einem 30 bis 40%-igem Glasfaseranteil, die 1 mm stark ist und von einer 0,1 mm Gleitschicht 19 abgeschlossen ist.

In Fig. 2 ist ein I-Träger 23 dargestellt, der entlang der Systemebene 12 einen analogen Aufbau zum plattenförmigen Bauelement 11 aufweist. Die Schichten 14, 15 sind mit ihren Kreuzungspunkten 16, 17 möglichst weit zueinander beabstandet, so daß die Schichten 14, 15 mit einem höheren Elastizitätsmodul möglichst nahe an dem Randbereich eines Querbundes 24 und 26 angeordnet sind, um bei einer Durchbiegung einen größtmöglichen Einfluß auf die Randfaserdehnung zu ermöglichen. Die Schichten 14, 15 betragen in diesem Ausführungsbeispiel in etwa 1 mm. Anwendungsspezifisch kann es möglich sein, daß eine der beiden Schichten 14, 15 stärker als die andere ausgebildet ist. Ein derartiger I-Träger wäre dann dergestalt anzuordnen, daß der Querbund 26 mit der dickeren Schicht 15 die maximale Randfaserdehnung aufnehmen müßte. In Seitenflächen des Querbundes 24, 26 und im Mittelsteg 27 liegen die Innenschicht 13 und Außenschicht 18, sowie die Gleitschicht 19 unmittelbar aneinander. Dadurch kann der I-Träger 23 rundum eine verschleißfeste Schicht aufweisen und baustellengerecht ausgebildet sein.

Bei beispielsweise einer Ausgestaltung eines 1-Trägers 23 mit einer Schicht 14, 15 von beispielsweise 1 mm und einer Innenschicht 13, die eine Schubspannung von in etwa 2,5 N/mm² aufnehmen kann, müßte gemäß der Gleichung, wonach die Schubspannung gleich dem Quotienten aus der Querkraft zu den Flächen des Mittelbereiches bzw. Steges ist, bei einer Höhe des 1-Trägers 23 von 160 mm der Mittelbereich 27 eine Breite von 50 mm aufweisen, um eine Querkraft von 20 kN aufnehmen zu können.

Im übrigen gelten auch die für das Bauelement 11 ausgeführten alternativen Ausführungsformen bzw. beliebige Kombinationen miteinander für den I-Träger 23 und umgekehrt.

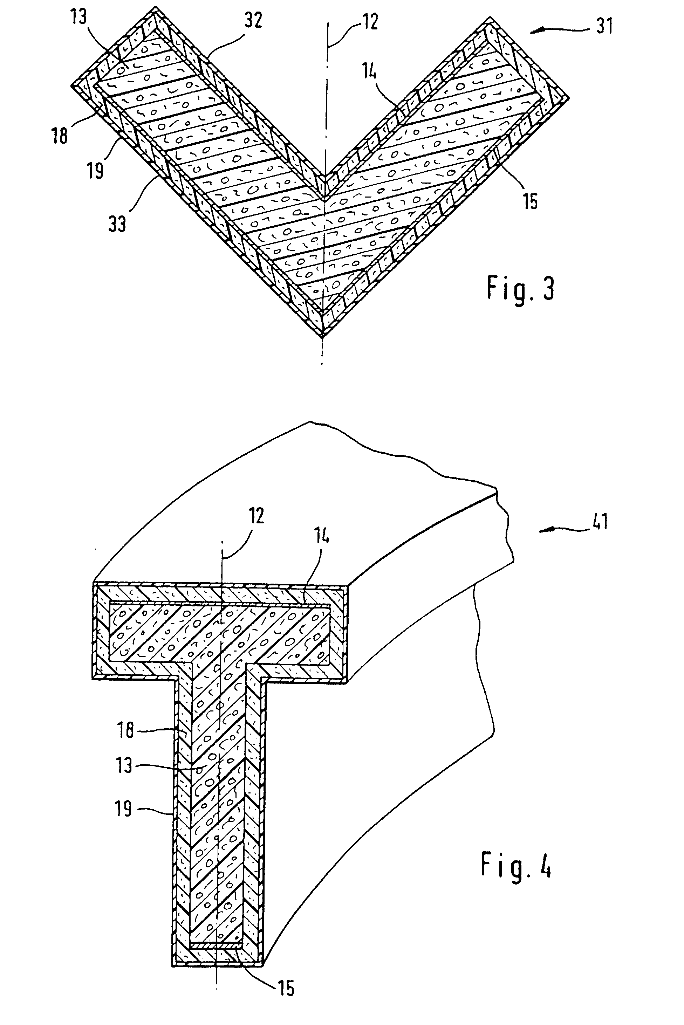

In Fig. 3 ist ein Winkelprofil 31 dargestellt, das im wesentlichen symmetrisch zur Systemebene 12 ausgebildet ist. Die Schichten 14, 15 laufen im wesentlichen parallel zur Außenfläche 32, 33 und sind nahe zu den Außenflächen 32, 33 angeordnet.

In Fig. 4 ist ein T-Träger 41 dargestellt, der entlang der Systemebene 12 einen analogen Aufbau gemäß dem Bauelement 11 aufweist. Bei dem T-Träger 41 kann vorteilhafterweise vorgesehen sein, daß die Schicht 15 gegenüber der Schicht 14 dicker ausgebildet ist, um aufgrund der geringeren Breite, die das freie Ende des vertikalen Steges aufweist, die auftretenden Durchbiegungen besser aufnehmen zu können. Die Schicht 15 kann beispielsweise doppelt so dick als die Schicht 14 ausgebildet sein. Dies wird im wesentlichen dann der Fall sein, wenn die Schicht 14 und die Schicht 15 aus demselben Material gebildet sind. Die Schichten 14, 15 können auch gleich dick ausgebildet sein, wobei dann unterschiedliche Materialien einsetzbar sein können, so daß beispielsweise die Schicht 14 aus einer Aluminiumlegierung ausgebildet ist und die Schicht 15 aus einem Stahlblech oder dergleichen ausgebildet ist. Dabei kann in Abhängigkeit der Elastizitätsmodule die Abmessung in der Dicke auch angepaßt werden.

Der Einsatz von unterschiedlichen Materialien und im wesentlichen gleichen Dicken oder von gleichen Materialien und unterschiedlichen Dicken kann auch bei sämtlichen anderen Ausführungsformen vorgesehen sein.

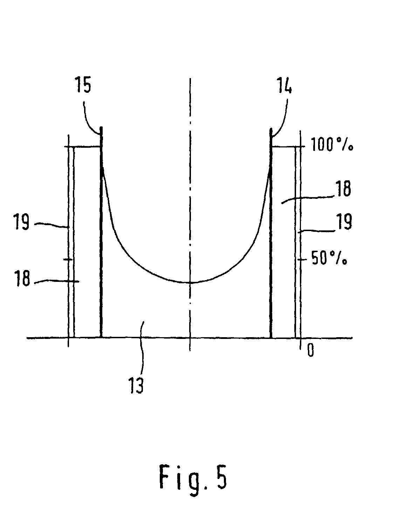

In Fig. 5 ist ein Diagramm entlang der Systemebene 12 dargestellt. Die Außenflächen 18, 19 weisen eine Dichte von jeweils 100 % auf. Die Innenschicht 13 ist ausgeschäumt, d.h. daß im mittleren Bereich bei einem 60 %-igen Schaumanteil ein Anteil von 40 % Material vorhanden ist. Der Schaumanteil nimmt zu den Schichten 14, 15 hin kontinuierlich ab und weist nahe der Schichten 14, 15 nahezu keinen Schaumanteil mehr auf, wodurch eine optimale Haftvermittlung zu den Schichten 14, 15 gegeben sein kann.

Ein derartiger Aufbau bzw. Verlauf der Dichte kann grundsätzlich für jegliche Formen von Bauelementen vorgesehen sein und die vorteilhaften Eigenschaften aufweisen, wie beispielsweise daß durch ein geringes Bauteilvolumen und durch Verwendung von kostengünstigen Materialien ein biegesteifes Bauteil geschaffen werden kann, das witterungs-, UV-beständig und schlagzäh ausgebildet ist und darüber hinaus für den Baubetrieb einsetzbar ist, was sich dadurch auszeichnet, daß es sich aufgrund der relativ dünnen Schichten 14, 15 leicht nageln und/oder sägen läßt.

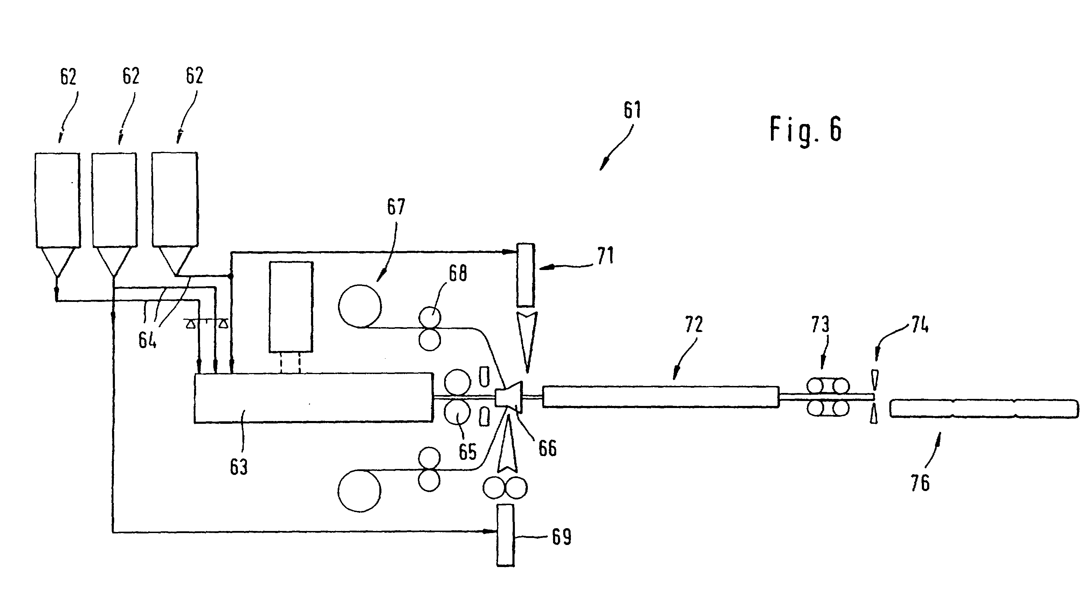

In Fig. 6 ist eine Anlage zur Durchführung eines Verfahrens dargestellt, die zur Herstellung der erfindungsgemäßen Bauelemente 11, 23, 31, 41 vorgesehen ist. Die Herstellung der unterschiedlichen Bauelemente 11, 23, 31, 41 wird beispielhaft an dem plattenförmigen Bauelement 11 beschrieben:

In Vorratsbehältern 62 sind verschiedene Kunststoffgranulatsorten, Füllstoffe und weitere Additive bereitgestellt, die zur Herstellung des plattenförmigen Elementes 11 benötigt werden. Beispielsweise kann in einem ersten Speicher 62 Polypropylen, in einem zweiten Speicher 62 Polyamid und in einem dritten Speicher 62 Glasfasern bereitgestellt werden. Zur Herstellung der Innenschicht 13 wird einem Doppelschneckenextruder 63 über Versorgungsleitungen 64 von den Vorratsbehältern 62 Polypropylen als auch ein Additiv zur Aufschäumung zugeführt. In dem Doppelschneckenextruder 63 werden die einzelnen Komponenten homogenisiert und über eine Schmelzpumpe 65 einer Koextrusionsdüse 66 zugeführt. Oberhalb und unterhalb der Koextrusionsdüse 66 ist ein Coil 67 mit einer Abziehvorrichtung 68 angeordnet. Die Schichten 14, 15, die beispielsweise als eine 0,3 mm dicke Aluminiumfolie ausgebildet sind, werden vom Coil 67 abgezogen und der Koextrusionsdüse 66 zugeführt. Die auf einem Coil 67 bevorrateten Aluminiumfolien 14, 15 sind beidseitig mit einem Haftvermittler versehen, damit eine optimale Haftung der Innenschicht 13 und der Außenschicht 18 an der Aluminiumfolie 14, 15 ermöglicht ist. Diese Schichten 14, 15 können auch unmittelbar nach Abzug vom Coil 67 mit Haftvermittler besprüht und ggf. getrocknet werden.

Der Zuführung der Aluminiumfolie 14, 15 nachgeschaltet ist ein Extruder 69, der beispielsweise mit Polyamid und/oder Polypropylen und Glasfaser aus dem Vorratsspeicher 62 versorgt wird. Über diesen Extruder 69 kann die homogenisierte Masse für die Außenschicht 18 der Koextrusionsdüse 66 zugeführt werden. Des weiteren kann der Zuführung der Außenschicht 18 nachgeschalten ein Gleitschichtextruder 71 vorgesehen sein, um auf die Außenschicht 18 die Gleitschicht 19 aufbringen zu können.

Durch die Koextrusionsdüse 66, die beispielsweise für einen Plattenstärke von 20 mm vorgesehen ist, kann in einem Arbeitsgang eine 5-Schicht-Platte mit einem Sandwich-Aufbau herstellbar sein. Der Koextrusionsdüse 66 ist die Kalibrierung 72 nachgeschalten. Der Weg zwischen dem Austritt der Koextrusionsdüse 66 und dem Beginn der Kalibrierung 72 ist kurz ausgebildet, da die Innenschicht 13 mit einem Treibmittel zum Ausschäumen des Polypropylen versehen ist. Dieses Treibmittel bewirkt, daß während dem Durchlaufen der Kalibrierstrecke die die Innenschicht 13 begrenzenden Schichten 14, 15 im wesentlichen gleichförmig auseinandergedrückt werden. Dadurch kann erzielt werden, daß die Schichten 14, 15 im wesentlichen parallel zueinander verlaufen. Des weiteren kann durch den erhöhten Druck erzielt werden, daß die Außenschichten 18 eine nahezu 100%ige Dichte aufweisen können. Die auf die Außenschichten 18, 19 wirkende Kraft hat des weiteren den Vorteil, daß eine im wesentlichen geschlossene äußere Schicht erzeugt werden kann, die als sogenannte Speckschicht bekannt ist.

Durch die Aufbringung der Gleitschicht 19 kann das Bauelement 11 mit geringerer Reibung die Kalibrierung 72 durchlaufen und mit einer Abzugsvorrichtung 73 leichter aus der Kalibrierung 72 herausgeführt werden. Die Kalibrierung 72 ist derart ausgebildet, daß die Kalibrierstrecke ausreicht, damit das Bauelement 11 beim Verlassen der Kalibrierung 72 eine vollständig ausgeschäumte Innenschicht 13 aufweist. Mit einer entsprechend der Produktions- bzw. Extrusionsgeschwindigkeit mitlaufenden Sägevorrichtung 74 kann das kontinuierlich hergestellte Bauelement 11 in die gewünschten Plattengrößen geschnitten werden und über eine Abstapeleinrichtung 76 zum Abtransport oder Lagerung bereitgestellt werden.

Eine derartige Anlage 61 kann eine Produktionsgeschwindigkeit von 0,5 bis 1 m/min aufweisen. Durch die erfindungsgemäße Ausgestaltung des Bauelements 11 mit zwei im wesentlichen parallel zu der Innenschicht 13 und den Außenschichten 18, 19 verlaufenden Schichten 14, 15 kann eine relativ einfache Zusammenführung der einzelnen Komponenten für eine Verbundbauweise des Bauelements 11 gegeben sein, die darüber hinaus auch eine höhere Biegesteifigkeit aufweist. Dieses Verfahren kann ebenso für die in Fig. 2 bis Fig. 4 beschriebenen Bauelemente 23, 31, 41 als auch weiteren Formen von Bauelementen eingesetzt werden.

Des weiteren kann zur Herstellung von Bauelementen 11, insbesondere plattenförmigen Baulementen ein Sinterpreßverfahren vorgesehen sein. Bei diesem Verfahren werden die einzelnen Schichten nacheinander übereinandergelegt und dann unter Einwirkung von Druck und Hitze miteinander in Verbindung gebracht. Dabei ist erforderlich, daß hohe Temperaturen und Drücke vorliegen, damit keine Inhomogenitäten vorliegen, die Sollbruchstellen darstellen würden. Aufgrund der diskontinuierlichen Herstellung und der hohen Drücke wird dieses Verfahren für Sonderformen mit geringerer Stückzahl bevorzugt eingesetzt.

Das Bauelement 11 kann vorteilhafterweise eine Vorspannung aufweisen, so daß in einer bestimmten Einbaulage eine erhöhte Kraftaufnahme oder Belastbarkeit gegeben ist. Diese Vorspannung wird vorteilhafterweise während des Strangpreßverfahrens eingebracht. Nachdem der Sandwich-Aufbau des Elementes vollständig extrudiert wurde, erfolgt eine Kalibrierung mittels Kalandertechnik oder dergleichen, wobei die Kalibrierung unmittelbar einer Extruderdüse nachgeschaltet ist, damit der noch erwärmte Kunststoff bearbeitet werden kann. Die extrudierte Platte kann auch über einen großen Radius hinweg abgezogen werden, um die Vorspannung einzubringen. Die Vorspannung ist vorteilhafterweise derart vorgesehen, daß die neutrale Faser des Bauelementes im Regelbelastungsfall nahezu in planer Ebene liegt.

Alternativ kann auch vorgesehen sein, daß die Bauelemente mittels Presstechnik herstellbar sind. Bei dieser Technik können die Schichten höherer Elastizität, wie beispielsweise eine Schicht aus einer Aluminium- oder Titanlegierung vorverformt, vorzugsweise plastisch, eingelegt und anschließend umspritzt werden. Alternativ kann die Vorverformung auch durch eine entsprechende Werkzeugkonstruktion und deren Steuerung erfolgen.

## Patentansprüche

1. Bauelement mit zumindest einer Schicht (13, 18, 19) aus Kunststoff und mit einer innerhalb des Bauelements (11) befindlichen Schicht (14, 15) aus einem Material, das einen wesentlich höheren Elastizitätsmodul als Kunststoff hat sowie mit zumindest einer zum Bauelement (11) gehörigen Systemebene (12), längs der das Bauelement (11) im wesentlichen homogene Eigenschaften hat und im wesentlichen homogen aufgebaut ist, dadurch gekennzeichnet, daß entlang der Systemebene (12) zumindest eine Innenschicht (13) und jeweils eine Außenschicht (18) aus Kunststoff vorgesehen ist, zwischen denen zumindest jeweils eine die Systemebene (12) durchquerende und getrennt voneinander angeordnete Schicht (14, 15) mit dem zweiten höheren Elastizitätsmodul vorgesehen sind.

2. Bauelement nach Anspruch 1, dadurch gekennzeichnet, daß die Schicht (14, 15) mit der Systemebene (12) jeweils einen Kreuzungspunkt (16, 17) bildet, in Randbereichen des Bauelementes (11) angeordnet sind.

3. Bauelement nach Anspruch 1 oder 2, dadurch gekennzeichnet, daß die Schichten (13, 14, 15, 18, 19) sich symmetrisch zur Systemebene (12) erstrecken.

4. Bauelement nach Anspruch 1, dadurch gekennzeichnet, daß die Schicht (14, 15) plan und/oder vollflächig ausgebildet ist.

5. Bauelement nach Anspruch 1, dadurch gekennzeichnet, daß die Schicht (14, 15) Durchbrechungen aufweist.

6. Bauelement nach Anspruch 1, dadurch gekennzeichnet, daß die Schicht (14, 15) profiliert ist.

7. Bauelement nach Anspruch 1, dadurch gekennzeichnet, daß die Schichten (14, 15) im wesentlichen parallel zueinander angeordnet sind.

8. Bauelement nach Anspruch 1, dadurch gekennzeichnet, daß die Schichten (14, 15) eine Dicke von 0,2 bis 3 mm aufweisen.

9. Bauelement nach Anspruch 1, dadurch gekennzeichnet, daß die Schicht (14, 15) aus Leichtmetall, vorzugsweise aus Aluminium oder Aluminiumlegierung, gebildet ist.

10. Bauelement nach Anspruch 1, dadurch gekennzeichnet, daß die Schicht (14, 15) aus Metall ausgebildet ist.

11. Bauelement nach Anspruch 1, dadurch gekennzeichnet, daß die Schicht (14, 15) aus nicht-magnetischem Material ausgebildet ist.

12. Bauelement nach Anspruch 1, dadurch gekennzeichnet, daß die Schicht (14, 15) aus faserverstärktem Material ausgebildet ist.

13. Bauelement nach Anspruch 1, dadurch gekennzeichnet, daß eine obere und untere Außenschicht (18) gleich stark ausgebildet ist.

14. Bauelement nach Anspruch 1, dadurch gekennzeichnet, daß die Außenschicht (18) einen Anteil von 5 % - 20 % der Gesamtdicke des Bauelementes (11) aufweist.

15. Bauelement nach Anspruch 1, dadurch gekennzeichnet, daß die obere und untere Außenschicht (18) und die Innenschicht (13) aus einem Material mit gleichem Elastizitätsmodul ausgebildet sind.

16. Bauelement nach Anspruch 1, dadurch gekennzeichnet, daß die obere und untere Außenschicht (18) einen höheren Elastizitätsmodul als die Innenschicht (13) aufweist.

17. Bauelement nach Anspruch 1, dadurch gekennzeichnet, daß die Innenschicht (13) aus PP oder PA ausgebildet ist und vorzugsweise zumindest um 20% aufgeschäumt ist.

18. Bauelement nach Anspruch 1, dadurch gekennzeichnet, daß die Innenschicht (13) mit Additiven, vorzugsweise Talkum oder Glasfaser, gefüllt ist.

19. Bauelement nach Anspruch 1, dadurch gekennzeichnet, daß die Außenschicht (18) aus einem Thermoplast, vorzugsweise Polyamid und/oder Polypropylen, ausgebildet ist.

20. Bauelement nach Anspruch 1, dadurch gekennzeichnet, daß die Außenschicht (18) Additive für eine Erhöhung der Schlagzähigkeit, der UV-Beständigkeit, der Witterungsbeständigkeit und/oder der Verschleißfestigkeit aufweist.

21. Bauelement nach Anspruch 1, dadurch gekennzeichnet, daß an Außenflächen der Außenschicht (18) eine Gleitschicht (19) vorgesehen ist.

22. Bauelement nach Anspruch 21, dadurch gekennzeichnet, daß die Gleitschicht (19) 0,1 bis 0,5 mm dick ausgebildet ist und reibungsreduzierende Additive aufweist.

23. Bauelement nach Anspruch 1, dadurch gekennzeichnet, daß die Schichten (14, 15) beidseitig eine Haftvermittlungsschicht für die Innenschicht (13) und Außenschicht (18) aufweisen.

24. Bauelement nach Anspruch 1, dadurch gekennzeichnet, daß die Schichten (14, 15) aus einem Material mit gleichem Elastizitätsmodul sind.

25. Bauelement nach Anspruch 1, dadurch gekennzeichnet, daß die Schichten (14, 15) aus einem Material gleicher Stärke ausgebildet sind.

26. Bauelement nach Anspruch 1, dadurch gekennzeichnet, daß die Schichten (14, 15) sich im wesentlichen bis zu den Seitenflächen (21, 22) erstrecken.

27. Bauelement nach Anspruch 1, dadurch gekennzeichnet, daß der Bauteil-Elastizitätsmodul in Abhängigkeit der Haftvermittlung zwischen Innenschicht (13) und Schicht (14, 15) als auch Außenschicht (18) und Schicht (14, 15) steht.

28. Bauelement nach Anspruch 1, dadurch gekennzeichnet, daß der Bauteil-Elastizitätsmodul in Abhängigkeit des Querschnittverbundes und Elastizitätsmodulen der einzelnen Schichten (13, 14, 15, 18) steht.

29. Verfahren zur Herstellung eines Bauelementes nach einem oder mehreren der vorhergehenden Ansprüche, gekennzeichnet durch folgende Merkmale:
a) Eine noch nicht ausgeschäumte Innenschicht (13) wird aus einem Extruder (63) einer Koextrusionsdüse (66) zugeführt.
b) Der Innenschicht (13) wird auf einer Oberseite und einer Unterseite mit einer Koextrusionsdüse (66) eine von jeweils einem Blechwickel (67) abgezogene Schicht (14, 15) zugeführt.
c) Auf die Schichten (14, 15) wird mittels Koextrusionsdüse (66) jeweils eine Außenschicht (18) aufgebracht.
d) Ein aus der Koextrusionsdüse (66) austretender Mehrschichtverbund (13, 14, 15, 18) wird einer Kalibrierung (72) zugeführt.
e) Der Mehrschichtverbund (13, 14, 15, 18) wird, nachdem die Innenschicht (13) ausgeschäumt ist, aus der Kalibrierung (72) herausgeführt.
f) Der Mehrschichtverbund (13, 14, 15, 18) wird in Bauelemente (11) zugeschnitten.

30. Verfahren nach Anspruch 29, dadurch gekennzeichnet, daß auf die Außenschicht (18) mit einem Extruder (71) oder der Koextrusionsdüse (66) jeweils eine Gleitschicht (19) aufgebracht wird.

31. Verfahren nach Anspruch 29, dadurch gekennzeichnet, daß auf die Schicht (14, 15) vor dem Zuführen zur Koextrusionsdüse (66) eine Haftvermittlungsschicht aufgetragen wird.

32. Verfahren nach Anspruch 29, dadurch gekennzeichnet, daß der aus der Kalibrierung (72) austretende Mehrschichtverbund (13, 14, 15, 18) von einer Abzugsvorrichtung (73) herausgefördert wird.

33. Verfahren nach Anspruch 29, dadurch gekennzeichnet, daß die Kalibrierung derart ausgebildet ist, daß auf das Bauelement (11) eine Vorspannung in Richtung Hochachse aufgebracht wird.

34. Verfahren nach Anspruch 33, dadurch gekennzeichnet, daß eine Kalandertechnik verwendet wird.

35. Verfahren nach Anspruch 29, dadurch gekennzeichnet, daß eine in Förderrichtung mitlaufende Sägevorrichtung (74) der Abziehvorrichtung (73) nachgeschaltet wird.

## Claims

1. Structural member with at least one layer [13, 18, 19] of plastic and with a layer [14, 15] located within the structural member [11] and of a material which has a substantially higher modulus of elasticity than plastic and also with at least one system plane [12] belonging to the structural member [11], and along which the structural member [11] has substantially homogeneous properties and is substantially homogeneously constructed, characterized in that along the system plane [12] at least one inner layer [13] and a respective outer layer [18] of plastic is provided, between which at least a respective layer [14, 15] with the second higher modulus of elasticity, which traverse the system plane [12] and are arranged separated from each other, are provided.

2. Structural member according to claim 1, characterized in that the layers (14, 15) form with the system plane [12] a respective intersection point [16, 17], and are arranged in edge regions of the structural member [11].

3. Structural member according to claim 1 or 2, characterized in that the layers [13, 14, 15, 18, 19] extend symmetrically of the system plane [12].

4. Structural member according to claim 1, characterized in that the layer [14, 15] is constructed planar and/or holohedral.

5. Structural member according to claim 1, characterized in that the layer [14, 15] has perforations.

6. Structural member according to claim 1, characterized in that the layer [14, 15] is profiled.

7. Structural member according to claim 1, characterized in that the layers [14, 15] are arranged substantially parallel to each other.

8. Structural member according to claim 1, characterized in that the layers [14, 15] have a thickness of 0.2-3 mm.

9. Structural member according to claim 1, characterized in that the layer [14, 15] is formed of light metal, preferably of aluminum or aluminum alloy.

10. Structural member according to claim 1, characterized in that the layer [14, 15] is constituted of metal.

11. Structural member according to claim 1, characterized in that the layer (14, 15) is constituted of non-magnetic material.

12. Structural member according to claim 1, characterized in that the layer [14, 15] is constituted of fiber reinforced material.

13. Structural member according to claim 1, characterized in that the upper and lower outer layers [18] are of equal thickness.

14. Structural member according to claim 1, characterized in that the outer layer [18] is a fraction of 5%-20% of the total thickness of the structural member [11].

15. Structural member according to claim 1, characterized in that the upper and lower outer layers [18] and the inner layer [13] are constituted of a material with the same modulus of elasticity.

16. Structural member according to claim 1, characterized in that the upper and lower outer layers [18] have a higher modulus of elasticity than the inner layer [13].

17. Structural member according to claim 1, characterized in that the inner layer is constituted by PP or PA and is foamed at least 20%.

18. Structural member according to claim 1, characterized in that fillers, preferably talc or glass fiber, are added to the inner layer [13].

19. Structural member according to claim 1, characterized in that the outer layer [18] is constituted by a thermoplastic, preferably polyamide and/or polypropylene.

20. Structural member according to claim 1, characterized in that the outer layer [18] has additives to raise the impact resistance, the UV resistance, the weather resistance, and/or the wear resistance.

21. Structural member according to claim 1, characterized in that a slip layer [19] is provided on outer surfaces of the outer layer [18].

22. Structural member according to claim 21, characterized in that the slip layer [19] is constituted 0.1-0.5 mm thick and has friction-reducing additives.

23. Structural member according to claim 1, characterized in that the layers [14, 15] have on both sides a adhesion primer layer for the inner layer [13] and outer layer [18].

24. Structural member according to claim 1, characterized in that the layers [14, 15] are of a material with the same modulus of elasticity.

25. Structural member according to claim 1, characterized in that the layers [14, 15] are of a material of the same thickness.

26. Structural member according to claim 1, characterized in that the layers [14, 15] extend substantially as far as the side surfaces [21, 22].

27. Structural member according to claim 1, characterized in that the modulus of elasticity of the member is in dependence on the adhesive bonding between the inner layer [13] and layer [14, 15] and also outer layer [18] and layer [14,15].

28. Structural member according to claim 1, characterized in that the modulus of elasticity of the member is in dependence on the cross sectional composite and modulus of elasticity of the individual layers (13, 14, 15, 18).

29. Process for the production of a structural member according to one or more of the foregoing claims, characterized by the following features:
(a) An as yet unfoamed inner layer [13] is supplied from an extruder [63] to a coextrusion nozzle [66].
(b) A layer [14, 15] taken off from a respective sheet metal coil [67] is supplied with a coextrusion nozzle [66] to an upper side and a lower side of the inner layer [13].
(c) A respective outer layer [18] is applied by means of coextrusion nozzle [66] to the layers [14, 15].
(d) A multilayer composite [13, 14, 15, 18] emerging from the coextrusion nozzle [66] is supplied to a gauging step [72].
(e) The multilayer composite [13, 14, 15, 18] is withdrawn from the gauging step [72] after the inner layer [13] has foamed.
(f) The multilayer composite [13, 14, 15, 18] is cut into structural members [11].

30. Process according to claim 29, characterized in that a respective slip layer [19] is applied to the outer layer [18] with an extruder [71] or with the coextrusion nozzle [66].

31. Process according to claim 29, characterized in that a adhesion primer layer is applied to the layer [14, 15] before it is supplied to the coextrusion nozzle [66].

32. Process according to claim 29, characterized in that the multilayer composite [13, 14, 15, 18] emerging from the gauging step [72] is forwarded out by a takeoff device [73].

33. Process according to claim 29, characterized in that the gauging step is constituted such that a prestress in the direction of the principal axis is applied to the structural member [11] according to the invention.

34. Process according to claim 33, characterized in that a calendering technique is used.

35. Process according to claim 29, characterized in that a saw device [74] which travels in the forwarding direction follows the takeoff device [73].

## Revendications

1. Élément structural avec au moins une couche (13, 18, 19) en matière plastique et avec une couche (14, 15) se trouvant à l'intérieur de l'élément structural (11), en une matière qui a un module d'élasticité nettement plus élevé que la matière plastique ainsi qu'avec au moins un plan de référence (12) appartenant à l'élément structural (11), le long duquel l'élément structural (11) a des propriétés essentiellement homogènes et est constitué de façon essentiellement homogène, caractérisé en ce qu'il est prévu le long du plan de référence (12) au moins une couche intérieure (13) et de part et d'autre une couche extérieure (18) en matière plastique, entre lesquelles il est prévu respectivement au moins une couche (14, 15) présentant le second module d'élasticité le plus élevé, lesquelles traversent le plan de référence (12) et sont séparées l'une de l'autre.

2. Élément structural suivant la revendication 1, caractérisé en ce que la couche (14, 15) forme chaque fois avec le plan de référence (12) un point de croisement (16, 17), qui est situé dans des régions du bord de l'élément structural (11).

3. Élément structural suivant la revendication 1 ou 2, caractérisé en ce que les couches (13, 14, 15, 18, 19) s'étendent symétriquement par rapport au plan de référence (12).

4. Élément structural suivant la revendication 1, caractérisé en ce que la couche (14, 15) se présente sous une forme plane et/ou avec une surface pleine.

5. Élément structural suivant la revendication 1, caractérisé en ce que la couche (14, 15) présente des interruptions.

6. Élément structural suivant la revendication 1, caractérisé en ce que la couche (14, 15) est profilée.

7. Élément structural suivant la revendication 1, caractérisé en ce que les couches (14, 15) sont disposées sensiblement parallèlement l'une à l'autre.

8. Élément structural suivant la revendication 1, caractérisé en ce que les couches (14, 15) présentent une épaisseur de 0,2 à 3 mm.

9. Élément structural suivant la revendication 1, caractérisé en ce que la couche (14, 15) est constituée de métal léger, de préférence d'aluminium ou d'un alliage d'aluminium.

10. Élément structural suivant la revendication 1, caractérisé en ce que la couche (14, 15) est constituée de métal.

11. Élément structural suivant la revendication 1, caractérisé en ce que la couche (14, 15) est constituée d'une matière non magnétique.

12. Élément structural suivant la revendication 1, caractérisé en ce que la couche (14, 15) est constituée d'une matière renforcée part des fibres.

13. Élément structural suivant la revendication 1, caractérisé en ce qu'une couche extérieure (18) supérieure et une inférieure sont d'égale épaisseur.

14. Élément structural suivant la revendication 1, caractérisé en ce que la couche extérieure (18) présente une fraction de 5% - 20% de l'épaisseur totale de l'élément structural (11).

15. Élément structural suivant la revendication 1, caractérisé en ce que les couches extérieures supérieure et inférieure (18) et la couche intérieure (13) sont constituées d'une matière ayant le même module d'élasticité.

16. Élément structural suivant la revendication 1, caractérisé en ce que les couches extérieures supérieure et inférieure (18) présentent un module d'élasticité plus élevé que la couche intérieure (13).

17. Élément structural suivant la revendication 1, caractérisé en ce que la couche intérieure (13) est constituée de PP ou de PA et est de préférence expansée en mousse à raison d'au moins 20%.

18. Élément structural suivant la revendication 1, caractérisé en ce que la couche intérieure (13) est chargée d'additifs, de préférence de talc ou de fibres de verre.

19. Élément structural suivant la revendication 1, caractérisé en ce que la couche extérieure (18) est constituée d'un thermoplastique, de préférence de polyamide et/ou de polypropylène.

20. Élément structural suivant la revendication 1, caractérisé en ce que la couche extérieure (18) présente des additifs destinés à augmenter la résistance au choc, la résistance aux UV, la résistance aux intempéries et/ou la résistance à l'usure.

21. Élément structural suivant la revendication 1, caractérisé en ce qu'il est prévu une couche de glissement (19) sur les faces extérieures de la couche extérieure (18).

22. Élément structural suivant la revendication 21, caractérisé en ce que la couche de glissement (19) présente une épaisseur de 0,1 à 0,5 mm et présente des additifs réduisant le frottement.

23. Élément structural suivant la revendication 1, caractérisé en ce que les couches (14, 15) présentent sur les deux faces une couche d'agent adhésif pour la couche intérieure (13) et la couche extérieure (18).

24. Élément structural suivant la revendication 1, caractérisé en ce que les couches (14, 15) sont constituées d'une matière ayant le même module d'élasticité.

25. Élément structural suivant la revendication 1, caractérisé en ce que les couches (14, 15) sont constituées d'une matière ayant la même épaisseur.

26. Élément structural suivant la revendication 1, caractérisé en ce que les couches (14, 15) s'étendent essentiellement jusqu'aux faces latérales (21, 22).

27. Élément structural suivant la revendication 1, caractérisé en ce que le module d'élasticité de l'élément de construction dépend de l'adhérence entre la couche intérieure (13) et la couche (14, 15) ainsi qu'entre la couche extérieure (18) et la couche (14, 15).

28. Elément structural suivant la revendication 1, caractérisé en ce que le module d'élasticité de l'élément de construction dépend de la section transversale composite et des modules d'élasticité des couches individuelles (13, 14, 15, 18).

29. Procédé pour la fabrication d'un élément structural suivant une ou plusieurs des revendications précédentes, caractérisé par les caractéristiques suivantes :
a) une couche intérieure (13), qui n'est pas encore expansée en mousse, est, à la sortie d'une extrudeuse (63), introduite dans une filière de co-extrusion (66) ;
b) une couche (14, 15), prélevée d'une bobine de tôle respective (67), est jointe à la couche intérieure (13) sur une face supérieure et une face inférieure, avec une filière de co-extrusion (66) ;
c) sur chacune des couches (14, 15), une couche extérieure (18) est appliquée au moyen de la filière de co-extrusion (66) ;
d) un produit composite stratifié (13, 14, 15, 18) sortant de la filière de co-extrusion (66) est envoyé à un calibrage (72) ;
e) le produit composite stratifié (13, 14, 15, 18) est extrait du calibrage (72), après que la couche intérieure (13) ait été expansée en mousse ;
f) le produit composite stratifié (13, 14, 15, 18) est tronçonné en éléments structuraux (11).

30. Procédé suivant la revendication 29, caractérisé en ce que l'on applique respectivement une couche de glissement (19) sur la couche extérieure (18) au moyen d'une extrudeuse (71) ou de la filière de co-extrusion (66).

31. Procédé suivant la revendication 29, caractérisé en ce que l'on applique une couche d'agent adhésif sur la couche (14, 15) avant l'introduction dans la filière de co-extrusion (66).

32. Procédé suivant la revendication 29, caractérisé en ce que le produit composite stratifié (13, 14, 15, 18) sortant du calibrage (72) est emmené par un dispositif d'extraction (73).

33. Procédé suivant la revendication 29, caractérisé en ce que le calibrage est conçu d'une façon telle que l'on applique à l'élément structural (11) une précontrainte dans la direction de l'axe principal.

34. Procédé suivant la revendication 33, caractérisé en ce que l'on utilise une technique de calandrage.

35. Procédé suivant la revendication 29, caractérisé en ce qu'un dispositif de sciage (74) déplaçable dans la direction du transport est installé après le dispositif d'extraction (73).
